# FASCICULE DE BREVET EUROPEEN

(11) **EP 2 133 977 B1**
(45) Date de publication et mention de la délivrance du brevet: **06.07.2016**
(21) Numéro de dépôt: 09162188.8
(22) Date de dépôt: 08.06.2009
(51) Int. Cl.: H02J 9/00

(54) **Circuit d'alimentation électrique d'une unité de commande d'une installation domotique**
Stromversorgungskreis einer Steuereinheit einer Heimanlage
Electric supply circuit of a control unit of a home automation installation

(30) Priorité: 12.06.2008 FR 0803269
(43) Date de publication de la demande: 16.12.2009
(73) Titulaire: Somfy SAS, 74300 Cluses (FR)
(72) Inventeur: Bruno, Serge, 74460 Marnaz (FR)
(74) Mandataire: Novaimo

(56) Documents cités:
- EP-A- 1 783 887
- WO-A-2007/087756
- FR-A- 2 771 865
- FR-A- 2 848 034
- US-A- 5 642 004

## Description

L'invention concerne un circuit d'alimentation électrique d'une unité de commande pilotant l'alimentation d'une charge par un réseau électrique alternatif, l'unité de commande étant normalement alimentée par un premier convertisseur comprenant un élément de stockage d'énergie électrique rechargeable tel qu'un condensateur ou super-condensateur ou tel qu'un accumulateur. L'invention concerne aussi un procédé de fonctionnement d'une unité de commande évoquée précédemment.

Cet élément rechargeable est la seule source d'énergie pendant les périodes de veille de l'unité de commande, c'est-à-dire des intervalles de temps pendant lesquels l'unité de commande est dans un mode de basse consommation, par exemple en attente de réception d'ordres.

Le convertisseur peut lui-même être raccordé au réseau électrique alternatif.

En général, un convertisseur présente un rendement d'autant plus faible que la puissance utilisée est inférieure à la puissance nominale du convertisseur, et également d'autant plus faible que la puissance nominale est faible. Il en résulte qu'on obtient un meilleur rendement global en utilisant le convertisseur pour recharger périodiquement et pendant des durées courtes, un élément de stockage d'énergie de forte capacité, plutôt que d'alimenter de manière continue l'unité de commande à l'aide du convertisseur. Pendant les périodes où le convertisseur n'est pas utilisé, il est déconnecté du réseau alternatif, et l'unité de commande est alimentée par l'élément de stockage d'énergie, qui donc se décharge de manière régulière. L'unité de commande surveille la décharge de l'élément de stockage d'énergie, de manière à provoquer une nouvelle connexion du convertisseur sur le réseau alternatif, chaque fois que nécessaire.

Cette situation ou des situations voisines, ont déjà été envisagées par exemple dans les domaines des téléviseurs, des magnétoscopes ou des photocopieurs.

La demande de brevet EP 1 783 887 décrit les solutions couramment employées : coupure complète de l'alimentation par le réseau commercial alternatif au moment du passage en mode veille et utilisation d'une source électrique séparée, de type continu, dans le mode veille. Dans cette demande, la source séparée est une pile sèche, non rechargeable, de capacité suffisante pour durer 30 ans.

La demande de brevet JP 2006149029 prévoit que la source utilisée en mode veille soit constituée d'un moyen de stockage qui puisse être rechargé dans un premier mode de veille.

Dans la demande de brevet JP 6349139, la recharge d'un condensateur de stockage ou d'une batterie rechargeable a lieu uniquement pendant l'utilisation de l'appareillage (magnétoscope). Cette demande prévoit la déconnexion complète du secteur pendant les phases de veille, au moyen d'un relais à ouverture. Ce relais est alimenté par le condensateur de stockage pendant les phases de veille, ce qui induit un besoin de recharges fréquentes.

Cependant, une configuration dans laquelle l'unité de commande d'une charge est alimentée par un convertisseur dont le raccordement au réseau alternatif est lui-même piloté par l'unité de commande pose un problème quand l'élément rechargeable contenu dans le convertisseur est totalement déchargé, ou au moins quand la charge électrique résiduelle dans cet élément rechargeable devient insuffisante pour alimenter l'unité de commande.

Une solution telle qu'envisagée dans la demande de brevet JP 6349139 est que le convertisseur soit par défaut raccordé au réseau alternatif. De ce fait, la charge de l'élément rechargeable est possible quel que soit l'état de ce dernier. C'est quand l'élément rechargeable est suffisamment chargé que l'unité de commande peut provoquer l'ouverture d'un contact reliant le convertisseur au secteur. De ce fait, l'élément rechargeable doit alimenter non seulement l'unité de commande, mais aussi le moyen permettant la déconnexion avec le réseau alternatif, ce qui dégrade le bilan énergétique.

Dans le brevet US 5,642,004 un élément de stockage est rechargeable soit par un panneau photovoltaïque, soit par le secteur quand la recharge photovoltaïque est insuffisante. Dans ce cas, un triac 4 devient conducteur et provoque le raccordement au secteur. Il est prévu un bouton poussoir 7 en parallèle sur le triac de manière à pouvoir forcer la charge lors d'une première installation. Cela requiert donc une intervention manuelle de l'installateur lors d'une première installation, ou de l'utilisateur s'il y a une coupure prolongée du secteur (par exemple dans une résidence secondaire inoccupée pendant une partie de l'année). Encore faut-il que le dispositif soit accessible et que l'utilisateur se souvienne, plusieurs mois après l'installation, de cette procédure de recharge manuelle.

Dans la demande de brevet US 2002/0118552, une alimentation est utilisée, branchée en permanence sur le secteur par liaison capacitive à l'aide d'un condensateur 215. Ce condensateur est parcouru aussi bien par des alternances positives que négatives de courant. Bien que la consommation d'énergie soit moindre qu'avec une liaison par résistance, elle ne permet pas un fonctionnement tel que le courant absorbé sur le secteur est rigoureusement nul pendant les périodes de veille. Il en est de même pour les différents modes de réalisation, par exemple lorsqu'ils utilisent une liaison capacitive 401 pour alimenter un ensemble comprenant un transformateur en parallèle avec un condensateur 402, la liaison capacitive 401 pouvant être court-circuitée, en mode actif, par un optocoupleur 404.

On notera enfin le document FR 2 848 034 A (SOMFY SA) du 4 juin 2004 qui décrit un circuit d'alimentation éléctrique selon le préambule de la revendication independante 1.

Le but de l'invention est de fournir un circuit d'alimentation électrique remédiant à ces inconvénients et améliorant les circuits d'alimentation connus de l'art antérieur. En particulier, l'invention propose un circuit d'alimentation permettant, d'une part, de minimiser la consommation d'énergie d'une installation à laquelle il est intégré et permettant, d'autre part, une alimentation automatique d'une unité de commande de l'installation suite à une connexion de l'installation au réseau commercial de distribution d'énergie. L'invention concerne aussi un procédé de fonctionnement d'une unité de commande évoquée précédemment.

Selon l'invention, le circuit d'alimentation électrique est défini par la revendication 1.

Différents modes de réalisation du circuit d'alimentation sont définis par les revendications dépendantes 2 à 8.

Le dispositif de commande selon l'invention est défini par la revendication 9.

Différents modes de réalisation du dispositif de commande sont définis par les revendications dépendantes 10 et 11.

Le récepteur d'ordres ou l'émetteur d'ordres selon l'invention est défini par la revendication 12.

L'installation selon l'invention est définie par la revendication 13.

Selon l'invention, le procédé de fonctionnement est défini par la revendication 14.

Un mode de réalisation du procédé de fonctionnement est défini par la revendication dépendante 15.

Le dessin annexé représente, à titre d'exemple, plusieurs modes de réalisation d'un circuit d'alimentation électrique selon l'invention et un procédé de fonctionnement d'une unité de commande pilotant différents modules d'une installation comprenant un circuit selon l'invention.
La figure 1 représente une installation comprenant un circuit d'alimentation selon l'invention.
La figure 2 représente un récepteur d'ordres comprenant un circuit d'alimentation selon l'invention.
Les figures 3 à 5 représentent trois modes de réalisation d'un circuit d'alimentation selon l'invention.
La figure 6 représente un récepteur d'ordres, alimenté par le circuit de la figure 5.
La figure 7 représente partiellement un récepteur d'ordres alimenté par un circuit d'alimentation selon un quatrième mode de réalisation.
La figure 8 représente un procédé de dimensionnement de circuit d'alimentation selon l'invention.
La figure 9 représente un procédé de fonctionnement d'une unité de commande pilotant le fonctionnement de différents modules d'une installation comprenant un circuit selon l'invention.
La figure 10 décrit une variante du procédé de fonctionnement représenté à la figure 9.
La figure 11 reprend le mode de réalisation de la figure 3 en détaillant un générateur d'impulsions.

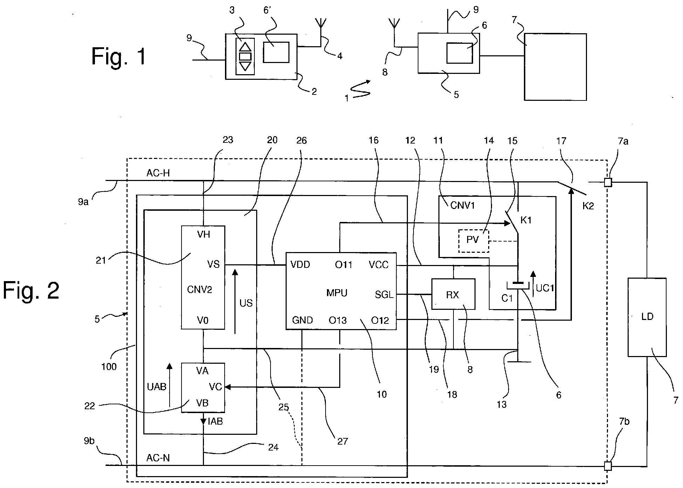

La figure 1 décrit une installation 1 à laquelle l'invention peut s'appliquer plus particulièrement. Il s'agit d'une installation permettant la gestion du confort ou de la sécurité dans un bâtiment comme une habitation ou un bâtiment commercial. L'installation comprend un émetteur d'ordres 2 muni d'une interface de commande 3 et d'un moyen d'émission 4, représenté par le symbole d'une antenne. L'installation comprend également un récepteur d'ordres 5 comprenant un élément rechargeable 6 et permettant l'alimentation d'une charge 7, telle qu'un actionneur pour manoeuvrer par exemple un élément mobile de fermeture, d'occultation, de protection solaire ou d'écran. Le récepteur d'ordres comprend un moyen de réception 8, représenté par le symbole d'une antenne. Le récepteur d'ordres est raccordé à un réseau électrique alternatif 9, et permet le transfert d'énergie électrique, par raccordement direct ou indirect, entre le réseau électrique alternatif et la charge.

Le raccordement est dit direct si la charge est directement connectée sur le réseau électrique alternatif : par exemple une lampe d'éclairage 230 V ou un moteur à induction monophasé 230 V peuvent être directement connectés par l'unité de gestion 5 sur un réseau électrique alternatif de type 230 V 50 Hz. Le raccordement est dit indirect si un convertisseur d'énergie est intercalé entre le réseau électrique alternatif et la charge, par exemple : une diode permettant de faire fonctionner la lampe d'éclairage à demi-puissance, un convertisseur-redresseur abaisseur et onduleur dans le cas d'un moteur à courant continu à commutation électronique (moteur *brushless)* ou un convertisseur-redresseur abaisseur dans le cas d'un moteur à courant continu et balais 24 V.

L'émetteur d'ordres 2 est également relié au réseau électrique 9 et contient un élément rechargeable 6'. L'émetteur d'ordres 2 peut contenir un capteur, par exemple un capteur météorologique, en remplacement ou en complément de l'interface de commande 3. Dans ce cas, le moyen d'émission 4 émet les données de mesures recueillies par le capteur.

L'invention s'applique donc aussi à l'alimentation d'un émetteur d'ordres quand celui-ci est raccordé au réseau électrique alternatif. Qu'il contienne une interface de commande ou un capteur, ou les deux, l'émetteur d'ordres permet - à distance - le raccordement de la charge au réseau électrique alternatif.

L'invention s'applique aussi au cas d'un récepteur d'ordres dans lequel le moyen de réception 8 des ordres comprend (ou est remplacé par) une interface de commande manuelle, par exemple un moyen de gestion d'un écran tactile devant être alimenté pendant que le reste du récepteur d'ordres est placé dans un mode sommeil.

La figure 2 décrit le récepteur d'ordres 5, comprenant un dispositif de commande 100 muni d'un circuit d'alimentation électrique 20 selon l'invention permettant d'alimenter une unité de commande 10 pilotant l'alimentation d'une charge 7 par raccordement direct sur le secteur 9, en fonction d'ordres reçus par le moyen de réception 8, par exemple de type radiofréquences, contenu dans le récepteur d'ordres. Le récepteur d'ordres 5 comprend l'élément rechargeable 6. De la même façon, la figure 2 peut décrire l'émetteur d'ordres 2 : en supprimant la charge 7, en remplaçant le moyen de réception 8 par le moyen d'émission 4 et en remplaçant l'élément rechargeable 6 par l'élément rechargeable 6'.

Le circuit d'alimentation électrique selon l'invention permet d'une part d'alimenter automatiquement l'unité de commande dès qu'une tension d'alimentation, comme la tension du réseau, apparaît à ses bornes, et en particulier, dès qu'une tension d'alimentation, comme la tension du réseau, apparaît pour la première fois à ses bornes. En particulier, le circuit permet l'alimentation de l'unité de commande lorsque celle-ci n'est pas alimentée (ou pas suffisamment) par l'élément rechargeable 6. D'autre part, le circuit se déconnecte automatiquement du réseau lorsqu'aucun signal de commande, notamment de l'unité de commande, n'est transmis au circuit d'alimentation. Le circuit d'alimentation électrique est un moyen d'alimentation de l'unité de commande, utilisé principalement lors de mises en service de l'installation après une longue durée d'inutilisation. Il peut néanmoins être activé systématiquement et de manière brève dans des situations particulières, par exemple lors de la réception d'ordres particuliers par l'unité de commande. Selon un mode de réalisation, l'élément rechargeable fait partie du circuit d'alimentation.

Le récepteur d'ordres comprend l'unité de commande 10 ou unité logique de traitement, telle qu'un microcontrôleur, normalement alimentée par l'élément rechargeable 6 tel un premier condensateur C1 ou un super-condensateur. L'alimentation principale de l'unité de commande est assurée par une première ligne positive 12 (première borne d'alimentation VCC) et par une ligne de masse 13 (borne GND). L'élément rechargeable 6 est contenu dans un premier convertisseur 11 permettant la recharge de l'élément rechargeable, ici à partir du réseau électrique alternatif. Le détail de ce convertisseur n'est pas représenté car de nombreuses topologies connues de l'homme du métier sont utilisables pour une telle conversion alternatif-continu de type abaisseur. On a néanmoins représenté un premier interrupteur commandé 15 contenu dans le premier convertisseur. Une première ligne de commande 16 établit une liaison entre une première sortie O11 de l'unité de commande 10 et une entrée de commande K1 du premier interrupteur commandé. Elle agit sur la fermeture du premier interrupteur commandé, une des extrémités de cet interrupteur commandé étant raccordée au conducteur de phase 9a du réseau alternatif. Quand cet interrupteur commandé est ouvert, le premier convertisseur ne consomme aucun courant, étant déconnecté du réseau alternatif, et il ne permet plus la recharge de l'élément rechargeable.

Alternativement, le premier convertisseur comprend un transducteur 14, représenté en trait pointillé, permettant la conversion en énergie électrique d'une énergie d'une autre nature, par exemple lumineuse, thermique ou mécanique. Dans ce cas, le transducteur permet la charge de l'élément rechargeable. Les possibilités de recharge par le réseau alternatif et par le transducteur peuvent être combinées.

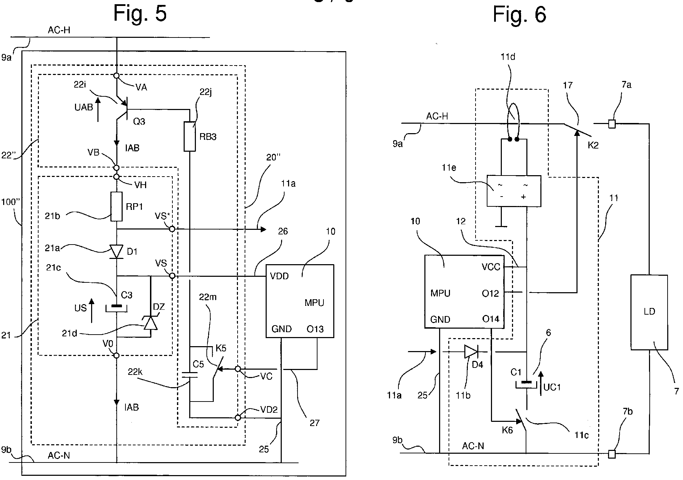

Alternativement, le premier convertisseur présente une possibilité d'alimentation à partir du circuit d'alimentation électrique selon l'invention : cette possibilité sera décrite en figure 6.

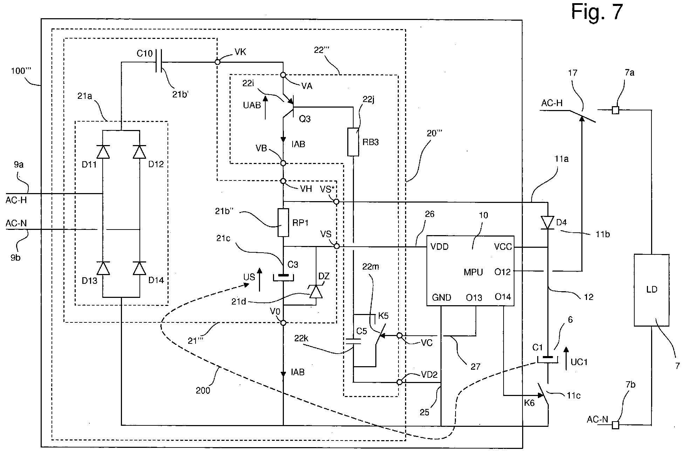

Alternativement, le premier convertisseur est intégré dans le circuit d'alimentation électrique selon l'invention : cette possibilité sera décrite en figure 7.

Un deuxième interrupteur commandé 17 est connecté entre le conducteur de phase 9a du réseau alternatif et une première borne d'alimentation 7a sur laquelle est connecté un premier pôle de la charge 7.
Le deuxième pôle de la charge 7 est raccordé à une deuxième borne d'alimentation 7b, reliée au conducteur de neutre 9b du réseau.

Ainsi, le deuxième interrupteur commandé 17 permet le raccordement de la charge 7 au réseau électrique. Une deuxième ligne de commande 18 établit une liaison entre une deuxième sortie 012 de l'unité de commande 10 et une entrée de commande K2 du deuxième interrupteur commandé.

Le moyen de réception 8 est alimenté entre la première ligne positive 12 et la ligne de masse 13.

Une ligne de signal 19 établit une liaison entre une sortie de signal du moyen de réception et une entrée de signal SGL de l'unité de commande 10. Selon l'interprétation du signal, l'unité de commande 10 donne ou ne donne pas un ordre de fermeture du deuxième interrupteur commandé afin de connecter ou de déconnecter la charge 7 sur le réseau électrique alternatif.

Comme il sera vu plus loin, la ligne de masse 13 est elle-même raccordée au conducteur de neutre 9b du réseau, soit directement soit à travers un dipôle.

En fonctionnement, l'unité de commande 10 surveille la valeur de la tension UC1 présente entre la première ligne positive et la ligne de masse. Quand cette tension est suffisamment élevée, l'unité de commande provoque l'ouverture du premier interrupteur commandé, de manière à faire cesser la charge de l'élément rechargeable 6. Ainsi, la consommation sur le secteur devient nulle. L'unité de commande se place alors en mode de veille, basse consommation. Néanmoins, le moyen de réception 8 reste alimenté : soit en permanence, soit avec un rapport cyclique prédéterminé de manière à pouvoir capter au moins partiellement tout ordre émis signal radiofréquences et susceptible de le concerner. Quand un tel ordre est capté, le moyen de réception réveille l'unité de commande, par exemple au moyen de la ligne de signal 19. Il en serait de même pour un moyen de réception d'ordres constitué par un écran tactile ou autre dispositif de détection manuelle alimenté pendant que l'unité de commande ou les autres dispositifs du récepteur d'ordres sont en mode de veille basse consommation, ou mode « sommeil ».

Quand la tension UC1 présente entre la première ligne positive et la ligne de masse devient inférieure à un certain seuil, du fait de la décharge de l'élément rechargeable pour alimenter le moyen de réception, alors cela provoque également le réveil de l'unité de commande 10 qui active aussitôt la première ligne de commande 16 de manière à raccorder à nouveau le premier convertisseur 14 au réseau alternatif et ainsi recharger l'élément rechargeable.

Les éléments décrits précédemment, leur topologie, et le mode de fonctionnement ci-dessus dans lequel un élément rechargeable est la principale source d'énergie pendant les périodes de veille de l'unité de commande sont connus de l'art antérieur décrit plus haut.

Afin de permettre un démarrage d'un récepteur d'ordres, quand l'élément rechargeable est totalement déchargé, soit parce qu'il s'agit d'une première installation, soit à la suite d'une coupure prolongée de la tension sur le réseau alternatif, on utilise en général un circuit d'alimentation constitué d'une pile primaire à très grande durée de vie, par exemple une pile au lithium.

Il en résulte un surcoût, et une nécessaire opération de maintenance si la durée de vie de l'installation est plus grande que celle de la pile primaire. Une autre solution connue de l'art antérieur consiste à utiliser un circuit branché en permanence sur le secteur. On s'efforce bien entendu de réduire au plus la consommation de ce circuit, mais il est clair que l'élément rechargeable n'est pas dans ce cas la seule source d'énergie pendant les périodes de veille de l'unité de commande. Le rendement global en est diminué.

Le circuit d'alimentation électrique 20 selon l'invention remédie à ces inconvénients et permet en particulier que l'élément rechargeable soit la seule source d'énergie pendant les périodes de veille de l'unité de commande.

Ce circuit d'alimentation électrique 20 comprend un deuxième convertisseur 21 disposé en série avec un dipôle variable 22. Par « dipôle variable », on entend que le dipôle se comporte vis-à-vis du courant traversant celui-ci comme un élément résistif dont la résistance est variable en fonction du temps.

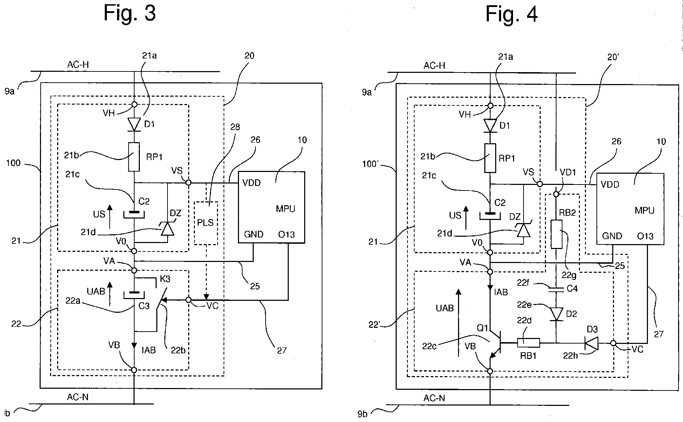

Le deuxième convertisseur 21 permet d'obtenir une tension de sortie US sensiblement constante entre une borne de sortie VS et une borne commune V0 lorsque le deuxième convertisseur est alimenté par une tension alternative (ou par une tension redressée double alternance) entre une borne d'entrée VH et la borne commune V0. Un tel convertisseur présente une structure connue de l'homme du métier. Il est par exemple décrit dans le brevet FR 2 771 865 mais il peut tout aussi bien être réalisé sous forme d'alimentation à découpage ou - à moindre coût - comme décrit dans les figures 3 à 5.

Le circuit d'alimentation électrique 20 est alimenté sur le réseau électrique alternatif 9 par une première liaison d'alimentation électrique 23 raccordée au conducteur de phase 9a et par une deuxième liaison d'alimentation électrique 24 raccordée au conducteur de neutre 9b. Selon les modes de réalisation, le deuxième convertisseur peut être disposé avant le dipôle variable (en allant du conducteur de phase vers le conducteur de neutre) comme sur la figure 1 (configuration amont), ou inversement peut être disposé après le dipôle variable (configuration aval), ou encore peut être réparti de part et d'autre du dipôle variable (configuration mixte).

Une connexion de masse 25 relie la ligne de masse 13 à la borne commune V0 du deuxième convertisseur. Quand on utilise une configuration aval, la borne commune V0 devient reliée au conducteur de neutre 9b, et la connexion de masse 25 relie la ligne de masse au neutre, comme représenté par un trait pointillé. La tension de sortie US du deuxième convertisseur est donc appliquée à l'unité de commande 10 entre une deuxième ligne positive 26 et la ligne de masse 13 raccordés respectivement à une deuxième borne d'alimentation VDD et à la borne de masse GND.

Le dipôle variable 22 comprend un premier pôle VA et un deuxième pôle VB. Il comprend également un pôle de commande VC. Une résistance équivalente au dipôle variable 22 peut être définie à tout instant comme étant égale au rapport de la tension UAB entre le premier pôle et le deuxième pôle et de l'intensité du courant IAB circulant entre ces deux pôles. Le sens du courant IAB est imposé par un redresseur du convertisseur.

En absence de commande appliquée sur le pôle de commande VC (par exemple lorsqu'on laisse ce pôle de commande sans connexion) alors le comportement du dipôle variable est caractérisé par une croissance de la résistance équivalente. Selon les modes de réalisation, cette croissance peut être continue ou discontinue, par exemple incrémentale.

Autrement dit, si le dipôle variable est placé dans un circuit permettant une valeur constante de l'intensité du courant IAB, la tension UAB aux bornes du dipôle variable ne peut que croître dans le temps, au moins sur une durée supérieure à la période incrémentale, tant que le circuit comprenant le dipôle variable permet cette croissance de la tension UAB.

Préférentiellement, la valeur initiale de la résistance équivalente est nulle.

Quant une commande est appliquée sur le pôle de commande VC (par exemple en appliquant une tension donnée entre le pôle de commande et l'un des premier pôle ou deuxième pôle, ou entre le pôle de commande et un autre pôle à définir) alors la résistance équivalente du dipôle variable reste constante ou prend une valeur prédéterminée, par exemple une valeur nulle.

Avec un tel dipôle variable disposé en série avec le deuxième convertisseur, on a l'assurance que le deuxième convertisseur sera tout d'abord alimenté normalement (c'est-à-dire sous la pleine tension du réseau alternatif) lors d'une première mise sous tension de l'unité de gestion 5, puis que la tension d'alimentation de ce deuxième convertisseur va décroître, progressivement ou par saut(s), jusqu'à s'annuler au moment où le dipôle variable présentera une résistance équivalente suffisamment grande pour être considérée comme infinie. Ainsi, le circuit d'alimentation électrique présente la propriété essentielle de déconnecter automatiquement du secteur le convertisseur qu'il contient, lorsqu'aucune commande n'est appliquée au dipôle variable. Cette déconnexion automatique ne prélève donc aucune puissance électrique sur l'élément rechargeable pour maintenir l'état déconnecté du convertisseur.

Cette déconnexion peut cependant être désactivée par action sur le pôle de commande VC. A cet effet, une troisième ligne de commande 27 relie une troisième sortie 013 de l'unité de commande 10 au pôle de commande du dipôle variable.

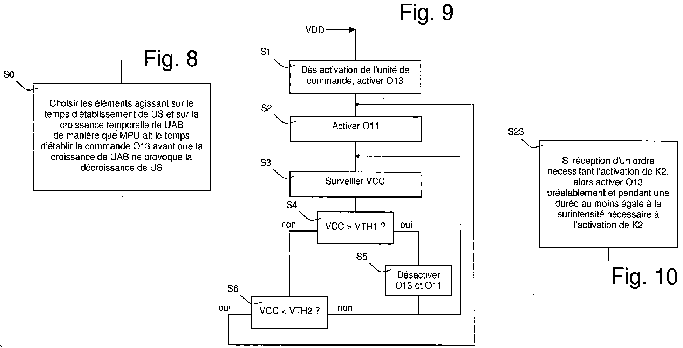

Comme représenté, à la figure 8, par l'étape unique S0 d'un mode d'exécution d'un procédé de dimensionnement, il existe une contrainte sur le choix des composants. Il est indispensable de choisir les éléments agissant sur le temps d'établissement de la tension de sortie US et sur la croissance temporelle de la tension UAB du dipôle variable de manière que l'unité de commande 10 (MPU) ait le temps d'établir la commande 013 avant que la croissance de la tension UAB ne provoque la décroissance de la tension de sortie US, puisque la somme des deux tensions est égale à la tension du réseau alternatif.

Un mode d'exécution du procédé de fonctionnement de l'unité de commande est représenté en figure 9. Le procédé de fonctionnement est activé par l'apparition d'une tension de sortie US suffisante, c'est-à-dire supérieure au seuil de fonctionnement de l'unité de commande sur la deuxième ligne positive 26. Cet évènement est symbolisé par la flèche VDD. Dès que l'unité de commande devient active, du fait de son alimentation, elle exécute une première étape S1 comprenant l'activation de la troisième sortie 013. De ce fait, la tension UAB du dipôle variable cesse alors de croître, ou même diminue voire s'annule. La phase d'alimentation électrique de l'unité de commande est donc préservée par cette première étape.

Dans une deuxième étape S2, l'unité de commande active la première sortie O11, de manière à relier le premier convertisseur 11 au réseau alternatif, et ainsi charger l'élément rechargeable 6. Cette charge peut prendre un temps plus ou moins important, pendant lequel l'alimentation de l'unité de commande reste assurée par le circuit d'alimentation électrique à l'aide de la deuxième ligne positive 26.

Dans une troisième étape S3, la tension UC1 disponible sur la première borne d'alimentation VCC est surveillée par l'unité de commande.

Dans une quatrième étape S4, on teste si la tension VCC est supérieure à un premier seuil suffisant VTH1 pour permettre l'alimentation de l'unité de commande par la seule première ligne positive 12. Si tel est le cas, l'unité de commande désactive, dans une étape S5, la première sortie O11 et la troisième sortie 013 et boucle sur l'étape S3. On passe alors dans le régime d'alimentation sur le seul élément rechargeable, qui caractérise au moins toutes les périodes de « veille » de l'unité de gestion. L'unité de commande peut passer en mode de veille. Le moyen de réception 8 est alimenté.

Si tel n'est pas le cas, on passe dans une sixième étape S6 dans laquelle on teste si la tension VCC est inférieure à un deuxième seuil VTH2 (inférieur au premier seuil). Si tel est le cas, on boucle sur l'étape S2. Si tel n'est pas le cas, on boucle sur l'étape S3.

Les premier et deuxième seuils sont choisis tels que l'unité de commande et le moyen de réception peuvent fonctionner correctement dans la plage de tension comprise entre les deux seuils.

On remarque que, dans ce mode d'exécution, l'alimentation électrique n'est plus jamais activée tant qu'il n'y a pas coupure prolongée du réseau d'alimentation.

L'invention comprend plusieurs modes de réalisation du circuit d'alimentation. Pour ne pas surcharger les figures et la description, des éléments équivalents sont désignés par la même référence dans les différents modes de réalisation.

La figure 3 décrit un premier mode de réalisation du circuit d'alimentation électrique, dans une configuration amont.

Partant de la borne d'entrée VH, le deuxième convertisseur 21 comprend un élément redresseur 21 a tel qu'une diode D1 en série avec un élément limiteur de courant tel 21 b telle qu'une résistance RP1 et en série avec un élément de filtrage 21 c tel qu'un deuxième condensateur de capacité C2 en parallèle avec un élément limiteur de tension 21 d telle qu'une diode Zener DZ. La tension de sortie US est prise aux bornes des deux derniers éléments dont les bornes communes sont respectivement la borne de sortie VS, également commune à l'élément limiteur de courant, et la borne commune V0.

Entre son premier pôle VA et son deuxième pôle VB, le dipôle variable 22 comprend un troisième condensateur 22a de capacité C3 en parallèle avec un troisième interrupteur commandé 22b. Cet interrupteur commandé peut comprendre une résistance interne, non représentée. Une activation du pôle de commande VC provoque la fermeture de l'interrupteur commandé et la mise en court-circuit du condensateur de capacité C3, ou au moins sa décharge dans la résistance interne de l'interrupteur commandé. Inversement, quand l'interrupteur commandé reste ouvert, la tension UAB aux bornes du dipôle augmente. Si on prend pour plus grande valeur possible l'amplitude positive de la tension du réseau alternatif (310 V pour un réseau 230 V), la tension UAB ne peut néanmoins dépasser cette valeur. En absence de commande, le courant IAB s'annule alors que la tension UAB est devenue maximum, au plus égale à l'amplitude de la tension du réseau alternatif : la résistance équivalente RAB est devenue infinie.

Comme dans tous les modes de réalisation selon l'invention, il y a croissance temporelle de la résistance équivalente, en absence de commande.

Si on suppose la capacité C3 supérieure à la capacité C2, les deux condensateurs étant initialement déchargés, et la constante de temps RP1.C3 de l'ordre de la milliseconde, alors le fonctionnement en absence de commande est le suivant lors d'une première alternance positive de la tension du réseau alternatif :
- charge rapide de C2, atteignant rapidement la tension inverse de DZ, et provoquant une tension de sortie US sensiblement constante,
- charge plus lente de C3, la tension aux bornes de C3 suivant sensiblement la tension du réseau, mais avec un décalage temporel d'environ une milliseconde et un décalage égal à la tension US
- décroissance du courant IAB et de US quand la tension du réseau alternatif décroît et blocage de la diode D1.

Eventuellement, un nouveau processus de charge a lieu lors de l'alternance positive suivante ou des alternances positives suivantes, jusqu'à ce que UAB atteigne la valeur 310 V, le courant IAB étant alors nul. La tension aux bornes de C2 tend à s'annuler du fait de la consommation de l'unité de commande 10.

En absence d'action sur le pôle de commande VC, l'unité de commande 10 est donc alimentée sous une tension de sortie US suffisante pendant une partie de l'alternance seulement. Cette situation change radicalement si, dès qu'elle devient opérationnelle, l'unité de commande active la troisième sortie 013, ce qui ferme l'interrupteur K3 : le deuxième convertisseur 21 devient alors pleinement opérationnel dans un fonctionnement simple alternance pour lequel il a été dimensionné.

Le deuxième convertisseur fournit donc, au moins provisoirement, un courant électrique à l'unité de commande lors de chaque raccordement de l'unité de commande au réseau électrique alternatif, l'unité de commande ayant la possibilité de prolonger autant que nécessaire cette phase d'alimentation.

Un inconvénient du premier mode de réalisation est cependant de nécessiter un troisième condensateur 22a de capacité C3 importante, alors qu'il ne joue pas un rôle utile en tant que stockage d'énergie. Une variante du premier mode consiste à provoquer une activation périodique du troisième interrupteur commandé 22b, indépendamment de l'activation possible par la troisième sortie 013. Cette variante est représentée, en trait pointillé, par un générateur d'impulsions 28 alimenté par la tension de sortie US et commandant, en parallèle sur la troisième ligne de commande 27, une brève fermeture du troisième interrupteur commandé, et donc une brève décharge du troisième condensateur. Avec un tel montage, et l'utilisation d'impulsions de rapport cyclique variable, il faut donc beaucoup plus de temps pour charger le troisième condensateur : autrement dit, on augmente artificiellement sa capacité apparente, ce qui permet, pour un même résultat, d'utiliser une capacité C3 beaucoup plus petite. Par exemple, on a C3 = 470 nF et C2 = 470 µF.

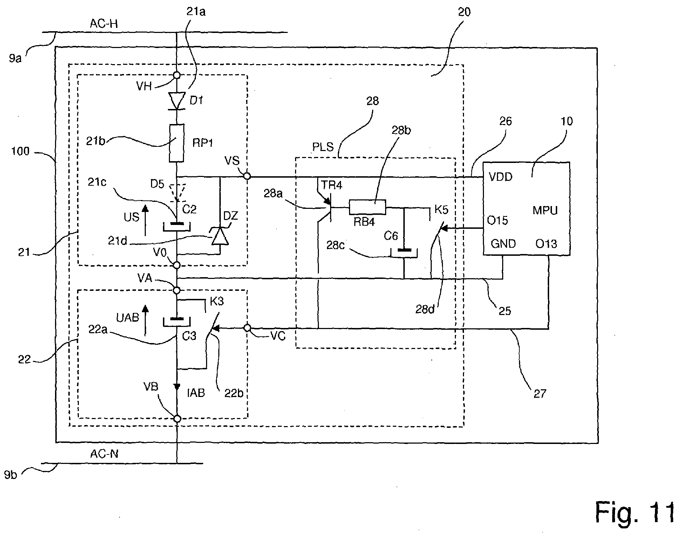

La figure 11 détaille cette variante en donnant un exemple de réalisation de générateur d'impulsions 28 sous forme d'un circuit auxiliaire PLS permettant d'activer la fermeture du troisième interrupteur commandé bien avant que la tension US ait atteint un niveau suffisant pour alimenter l'unité de commande. Par exemple, une tension US de 0.6 volts suffit à activer la fermeture du troisième interrupteur commandé. Le circuit auxiliaire PLS est alimenté par la tension de sortie du convertisseur. Alternativement, il est alimenté par une tension aux bornes d'un élément du convertisseur.

L'émetteur d'un quatrième transistor 28a (TR4) de type PNP est raccordé à borne de sortie du convertisseur et son collecteur est raccordé au pôle de commande du dipôle. La base du transistor 28a est raccordée à un circuit de base constitué par la mise en série d'une résistance 28b (RB4) et d'un condensateur 28c (C6) dont l'extrémité libre est raccordée à la masse électrique. Dès que la tension de sortie dépasse le seuil de conduction du transistor (par exemple 0.6 volts), alors le transistor conduit et cette conduction active la commande du troisième interrupteur commandé, ce qui a pour effet d'augmenter l'intensité du courant IAB et donc la charge du deuxième condensateur 21 c. Cette première impulsion de charge peut n'avoir lieu que lorsque la tension du secteur est proche de sa valeur maximum, et la charge du deuxième condensateur jusqu'à obtenir une tension de sortie (fixée par la diode Zener 21d) suffisante peut nécessiter plusieurs périodes du secteur, par exemple une dizaine de périodes. On choisit donc une constante de temps de l'ordre de 200 millisecondes pour le produit RB4xC6. Le condensateur 28c continue à se charger jusqu'à ce que le transistor 28a ne soit plus jamais conducteur.

En fonctionnement normal, l'unité de commande MCU reçoit une tension US suffisante sur la deuxième ligne d'alimentation avant que soient écoulées 200 millisecondes, et c'est elle qui prend le relais en activant la troisième sortie 013 pour commander la fermeture du troisième interrupteur 22b. Alternativement ou de manière complémentaire, l'unité de commande active une cinquième sortie 015 raccordée à un cinquième interrupteur commandé 28d (K5) branché en parallèle sur le condensateur 28c. Le fait de court-circuiter ce condensateur assure qu'il sera bien déchargé en cas de coupure et réapparition de la tension secteur.

Préférentiellement, on ajoute une diode (ou deux diodes) comme représenté en trait pointillé dans la position D5, en série avec le deuxième condensateur 21 c. Ainsi, le passage d'un courant IAB provoque immédiatement aux bornes de cette diode une tension de 0.6 volts, ce qui permet la conduction du circuit auxiliaire PLS avant même que le deuxième condensateur 21 c ait commencé à se charger.

La figure 4 décrit un deuxième mode de réalisation du dispositif de commande 100' comprenant le circuit d'alimentation électrique 20' selon l'invention, dans une configuration amont.

Dans ce deuxième mode de réalisation, le besoin d'un troisième condensateur de capacité importante est supprimé, et un choix de capacité beaucoup plus faible est possible pour piloter la durée de connexion du deuxième convertisseur 21, qui est inchangé. Le dipôle variable 22' comprend un premier transistor 22c ou Q1 de type NPN dont le collecteur est raccordé au premier pôle VA et dont l'émetteur est raccordé au deuxième pôle VB. La base du transistor Q1 est raccordée à une première résistance de base 22d de valeur RB1 dont l'extrémité libre est reliée à la cathode d'une deuxième diode 22e ou D2 disposée en série avec un quatrième condensateur 22f de capacité C4 et une deuxième résistance de base 22g de valeur RB2 dont l'extrémité libre est reliée à un premier pôle VD1, lui-même étant raccordé au conducteur de phase 9a. La cathode d'une troisième diode 22h est reliée à la cathode de la deuxième diode. L'anode de la troisième diode est raccordée au pôle de commande VC.

Tant que la troisième sortie 013 de l'unité de commande est inactive, elle est dans un état de haute impédance, c'est-à-dire comme déconnectée de toute borne d'alimentation ou d'entrée ou de sortie de l'unité de commande. Dans ce cas, la troisième diode D3 ne conduit pas. Lors d'une première mise sous tension, le quatrième condensateur C4 est initialement déchargé et le courant dans les résistances de base est maximum. Le premier transistor Q1 est donc conducteur. Cependant, il existera nécessairement une phase où le quatrième condensateur C4 sera complètement chargé : le premier transistor Q1 devient alors bloqué, et le deuxième convertisseur 21 est alors isolé du réseau électrique alternatif, en particulier du conducteur de neutre du réseau électrique alternatif. Il est cependant possible de prolonger la conduction du premier transistor Q1 en rendant la troisième sortie 013 active : le courant dans la base du transistor Q1 passe cette fois dans la diode D3. Dans ce montage, il est beaucoup plus facile d'obtenir une forte valeur pour la constante de temps (RB1+RB2)xC4, en comparaison de la constante de temps RP1 xC3 du premier mode de réalisation, pour respecter le procédé de dimensionnement.

En absence de commande, le courant IAB s'annule alors que la tension UAB est devenue maximum, au plus égale à l'amplitude de la tension du réseau alternatif : la résistance équivalente RAB est devenue infinie.

La figure 5 décrit un troisième mode de réalisation de dispositif de commande 100" dans lequel le circuit d'alimentation électrique 20" selon l'invention est dans une configuration aval. Le deuxième convertisseur 21 est identique aux cas précédents, mais disposé cette fois après le dipôle variable 22" quand on parcourt le circuit série depuis le conducteur de phase vers le conducteur de neutre. Le dipôle variable 22 comprend un troisième transistor 22i ou Q3, de type PNP, dont l'émetteur est raccordé au premier pôle VA et dont le collecteur est raccordé au deuxième pôle VB. La base du troisième transistor est raccordée à une résistance de base 22j de résistance RB3 en série avec un cinquième condensateur 22k de capacité C5, ce dernier étant disposé en parallèle sur un cinquième interrupteur commandé 22m dont la commande K5 est raccordée au pôle de commande VC. L'extrémité libre du condensateur est raccordée à un deuxième pôle VD2 relié à la masse GND de l'unité de commande par la connexion de masse 25.

Le condensateur 22k étant initialement déchargé, le transistor Q3 est conducteur. Il devient progressivement moins conducteur quand le condensateur C5 se charge et que le courant dans la base du transistor diminue, et totalement bloqué quand le condensateur C5 est totalement chargé.

Cependant, la fermeture de l'interrupteur commandé permet la décharge du condensateur C5.

Comme dans le cas précédent, il est beaucoup plus facile dans ce mode de réalisation d'obtenir une forte valeur pour la constante de temps RB3xC5, en comparaison de la constante de temps RP1xC3 du premier mode de réalisation, pour respecter le procédé de dimensionnement.

En absence de commande, le courant IAB s'annule alors que la tension UAB est devenue maximum, au plus égale à l'amplitude de la tension du réseau alternatif : la résistance équivalente RAB est devenue infinie.

La figure 6 représente partiellement un récepteur d'ordres utilisant le circuit d'alimentation électrique de la figure 5. Cette figure illustre, en combinaison, le cas où l'élément rechargeable 6 peut être rechargé à partir du circuit d'alimentation électrique et/ou le cas où l'élément rechargeable peut être rechargé à partir du réseau alternatif mais par couplage non galvanique, sous forme d'un prélèvement série.

La figure 6 se lit donc en complément de la figure 5. Pour plus de clarté, on a cependant dupliqué l'unité de commande 10 pour faire figurer les entrées/sorties non représentées en figure 5, et on a volontairement omis de représenter le moyen de réception 8 tel que représenté sur la figure 2. Le récepteur d'ordres permet de connecter (par connexion directe) la charge 7 au réseau électrique alternatif 9, comme dans le cas de la figure 2.

Outre l'unité de commande 10, le récepteur d'ordres comprend le premier convertisseur 11, contenant l'élément rechargeable 6, par exemple une supercapacité C1. La première ligne positive 12 est raccordée à la borne positive de l'élément rechargeable et à la première borne d'alimentation VCC.

Une connexion d'alimentation 11a relie l'anode d'une quatrième diode 11 b (ou D4) contenue dans le premier convertisseur à l'anode de la première diode 21 b (ou D1) contenue dans le deuxième convertisseur 21 (de la figure 5). Cette connexion d'alimentation passe par une borne de sortie VS* du deuxième convertisseur. La cathode de la diode D4 est raccordée à la borne positive de l'élément rechargeable 6, tandis que la borne négative de cet élément rechargeable est connectée à la ligne de masse par l'intermédiaire d'un sixième interrupteur commandé 11 c. La commande K6 de cet interrupteur commandé est reliée à une quatrième sortie 014 de l'unité de commande.

Ainsi, il est donc possible de charger l'élément rechargeable 6 en utilisant une partie du circuit d'alimentation électrique 20". Si la capacité C1 de cet élément est très importante, l'unité de commande peut n'activer la quatrième sortie 014 que pendant de brefs intervalles de temps, de manière à permettre la recharge du troisième condensateur C3 quand le sixième interrupteur commandé 11 c n'est pas activé.

Pendant une phase de charge de l'élément rechargeable à partir du circuit d'alimentation électrique, le cinquième interrupteur commandé 22m est activé. Quand la tension UC1 est suffisante, la troisième sortie 013 est désactivée. Le cinquième interrupteur commandé s'ouvre et le circuit d'alimentation électrique devient rapidement inactif, le deuxième convertisseur 21 devenant déconnecté du réseau alternatif. L'alimentation de l'unité de commande 10 est alors réalisée à partir de l'élément rechargeable.

Un rendement supérieur est cependant obtenu en chargeant l'élément rechargeable d'une manière plus directe avec des composants de conversion à bon rendement.

Une solution particulièrement intéressante utilise un « prélèvement série », comme représenté ici dans le reste du convertisseur 11.

Un transformateur 11 d de type transformateur d'intensité permet de recueillir une tension suffisante (par exemple 3 volts efficaces) sur les entrées alternatives d'un pont redresseur 11e, dès que la charge 7 est alimentée lors d'une fermeture du deuxième interrupteur commandé 17. La sortie négative du pont redresseur est raccordée à la ligne de masse (donc à la borne GND) tandis que la sortie positive du pont redresseur est raccordée à la borne positive de l'élément rechargeable.

Ce montage est particulièrement intéressant lors d'une utilisation journalière de la charge 7, par exemple un moteur d'actionneur de volet roulant ouvert et fermé une fois par jour. Un dimensionnement correct permet de recharger l'élément rechargeable (supercapacité) en une dizaine de secondes (durée de la manoeuvre), tandis qu'il permettra ensuite d'alimenter l'unité de commande et le moyen de réception pendant plus d'une dizaine d'heures et au moins jusqu'à la manoeuvre suivante. Si la manoeuvre suivante n'a pas lieu avant dans le délai prévu, alors on active la recharge de l'élément rechargeable à partir du circuit d'alimentation électrique.

Pour ne pas dépasser la tension maximum d'utilisation d'une supercapacité, un régulateur de tension non représenté peut être utilisé, aussi bien en aval de la diode D4 que du pont redresseur. Dans ce cas, il est préférable que la cathode de la diode D4 soit raccordée à la sortie positive du pont redresseur, et que le régulateur soit intercalé entre ce point de raccordement et la borne positive de la supercapacité.

La figure 7 décrit un quatrième mode de réalisation de dispositif de commande 100"' dans lequel le circuit d'alimentation électrique 20"' selon l'invention est dans une configuration mixte. Ce mode de réalisation est particulièrement adapté à l'emploi d'un convertisseur de type capacitif, c'est-à-dire dans lequel la chute de tension est principalement provoquée par un élément capacitif, permettant ainsi de limiter la puissance dissipée dans le convertisseur. Le mode de réalisation convient néanmoins à d'autres types de convertisseurs, par exemple avec chute de tension résistive.

Le deuxième convertisseur 20'" est alors réparti de part et d'autre du dipôle variable 22"', celui-ci étant identique au dipôle variable 22" de la figure 5. Une première partie du deuxième convertisseur 20'" comprend un redresseur 21 a en pont de Graëtz se substituant à la diode D1 et dont les entrées alternatives sont raccordées au conducteur de phase 9a et au conducteur de neutre 9b. Alternativement, on peut utiliser une diode D1 dont l'anode est reliée au conducteur de phase. Les cathodes communes du redresseur (ou alternativement la cathode de la diode D1) sont raccordées à une première extrémité de condensateur C10, dont la deuxième extrémité constitue une borne intermédiaire VK. Le condensateur de limitation C10 constitue une première partie 21 b' d'un élément abaisseur. L'élément abaisseur comprend aussi une deuxième partie 21 b" constituée par une résistance RP1 jouant un rôle de protection lors d'une mise sous tension au moment d'un maximum de tension.

Dans un montage classique de convertisseur, la borne intermédiaire VK est confondue avec la borne d'entrée VH et on trouve successivement la résistance de protection RP1, et l'élément de filtrage 21 c constitué par le condensateur C3, en parallèle avec la diode zener DZ.

La borne commune V0 est raccordée aux anodes communes du redresseur (ou alternativement au conducteur de neutre si la diode D1 est utilisée plutôt qu'un redresseur en pont).

Dans le mode de réalisation de la figure 7, le convertisseur est ouvert entre la borne intermédiaire VK et la borne d'entrée VH et le dipôle variable est disposé en série avec le convertisseur, le premier pôle VA étant raccordé à la borne intermédiaire et le deuxième pôle VB étant raccordé à la borne d'entrée VH.

Il est à noter qu'on pourrait sans inconvénient regrouper les deux parties de l'élément abaisseur.

Le fonctionnement est strictement analogue à celui de la figure 5 pour ce qui concerne la connexion automatique et/ou la déconnexion automatique par fermeture ou ouverture du transistor Q3 contenu dans le dipôle variable. La constante de temps du circuit d'ouverture est déterminée par le produit RB3xC5.

A l'exception du moyen de réception 8, non représenté pour simplifier, la figure 7 représente un récepteur d'ordres permettant l'alimentation d'une charge 7. Dans ce récepteur d'ordres, l'élément rechargeable 6 est exclusivement alimenté à partir du deuxième convertisseur, en utilisant un montage identique à celui de la figure 6 mais sans les éléments permettant le prélèvement série. La charge de l'élément rechargeable est commandée comme décrit relativement à la figure 6.

Une variante du circuit de commande 100'" est symbolisée par la flèche pointillée 200. Cette variante consiste à utiliser l'élément rechargeable 6 comme troisième condensateur C3. La diode D4 et la première ligne positive VCC disparaissent, l'unité de commande MPU ne comportant plus qu'une seule ligne positive VDD.

Cette variante nécessite une constante de temps RB3xC5 plus importante puisque le temps de charge de l'élément de stockage depuis une situation totalement déchargée, est beaucoup plus important que celui du condensateur C3. Le montage ainsi réalisé en un seul convertisseur est plus simple, mais son dimensionnement peut s'avérer plus délicat, notamment dans le cas d'un convertisseur de type capacitif et le condensateur de limitation C10 peut être alors avantageusement remplacé par un élément purement résistif.

Les dispositifs selon l'invention sont donc susceptibles de nombreuses variantes de réalisation. Les interrupteurs commandés sont réalisables avec des transistors ou des relais. Les transistors bipolaires de type NPN ou PNP peuvent être remplacés par des transistors MOS canal N ou canal P. Selon les cas, des résistances non représentées, permettent d'assurer le blocage des transistors. On peut également utiliser des thyristors ou tout type d'interrupteur commandé, par exemple un opto-triac. De même, des diodes non représentées sont utilisées quand il y a lieu pour éviter une conduction inverse d'un transistor.

Dans tous les cas, on désigne par « électrodes de puissance » les électrodes parcourues par le courant principal d'un transistor, par exemple : émetteur, collecteur, drain, source etc.

On désigne par « électrode de commande » une électrode permettant de contrôler la conduction du transistor. Les circuits de commande et de puissance peuvent être sans liaison galvanique, par exemple dans le cas d'un opto-triac.

A l'intérieur de l'unité de commande 10, la première entrée d'alimentation VCC et la deuxième entrée d'alimentation VDD peuvent être chacune reliée à l'anode de deux diodes dont les cathodes sont communes et constituent une ligne positive interne unique pour l'unité de commande.

Les descriptions des procédés de la figure 8 et de la figure 9 sont données plus haut, après la description de la figure 2.

Il existe plusieurs variantes du procédé de fonctionnement. Une variante particulièrement intéressante, dans le cas d'un récepteur d'ordres consiste à commander systématiquement l'activation du circuit d'alimentation électrique dès qu'un ordre nécessite l'activation du deuxième interrupteur commandé 17. En effet, cet interrupteur commandé est souvent un relais dont la bobine de commande nécessite un courant d'appel important.

Cette variante est représentée sur la figure 10. Dans une étape S23, intercalée entre la deuxième et la troisième étape du procédé de fonctionnement, on teste si un ordre nécessite de mettre en oeuvre le deuxième interrupteur commandé (commande K2). Si oui, on active alors le deuxième convertisseur (par activation de la troisième sortie 013), ceci de manière brève (par exemple pendant 10 à 20 millisecondes). Autrement dit, le deuxième convertisseur fournit un courant à l'unité de commande lors de chaque raccordement de la charge au réseau électrique alternatif.

D'une façon plus générale, le deuxième convertisseur peut être sollicité chaque fois qu'un courant de pointe est nécessaire : cela préserve la ressource énergétique stockée dans l'élément rechargeable 6. Ces actions étant brèves, l'impact énergétique est négligeable.

Le deuxième convertisseur peut également être sollicité systématiquement dès lors qu'il y a réveil de l'unité de commande suite à l'apparition d'un signal sur la ligne de signal 19.

Le premier convertisseur peut comprendre un transducteur d'énergie, indépendant du réseau électrique alternatif, par exemple un panneau photovoltaïque, un générateur thermoélectrique ou piézoélectrique. Il peut également combiner un transducteur d'énergie et une liaison connectable au réseau électrique alternatif. Le premier convertisseur peut enfin être inclus dans le circuit d'alimentation selon l'invention, et alors constituer tout ou partie du deuxième convertisseur.

Le générateur d'impulsions 28 (ou circuit auxiliaire) a été décrit dans la figure 11 en relation avec le mode de réalisation de la figure 3. Ce circuit auxiliaire peut avantageusement être utilisé dans les autres modes de réalisation, puisqu'il permet de garantir au moins plusieurs connexions répétées du convertisseur avant que la tension de sortie du convertisseur soit suffisante pour que l'unité de commande puisse elle-même commander cette connexion. Au moins pendant toute cette phase transitoire, le circuit auxiliaire se substitue donc à l'unité de commande pour commander la connexion du convertisseur au réseau électrique par application d'un signal sur la borne de commande VC du dipôle variable.

## Revendications

1. Circuit d'alimentation électrique (20; 20'; 20") d'une unité de commande (10) d'une installation, l'unité de commande pilotant l'alimentation électrique d'une charge (7) de l'installation par un réseau électrique (9) comprenant des conducteurs (9a, 9b), l'unité de commande étant alimentée sur une première entrée d'alimentation (VCC) par un élément rechargeable (6), **caractérisé en ce que** le circuit d'alimentation électrique comprend un convertisseur (21) dont la sortie alimente l'unité de commande sur une deuxième entrée d'alimentation (VDD), le convertisseur étant branché en série avec un dipôle (22) entre les conducteurs, le dipôle comprenant des moyens (22a ; 22b ; 22c ; 22i) de connexion automatique du convertisseur au réseau électrique de manière à alimenter automatiquement l'unité de commande lors d'une connexion du circuit d'alimentation au réseau, et de déconnexion automatique du convertisseur du réseau électrique après une phase d'alimentation de l'unité de commande par le convertisseur, les moyens de connexion automatique étant également activables sur commande de l'unité de commande et les moyens de déconnexion automatique étant tels que la déconnexion automatique et au moins le maintien de cette déconnexion ne prélève aucune puissance électrique sur l'élément rechargeable, le dipôle se comportant vis-à-vis du courant traversant celui-ci comme un élément résistif dont la résistance est variable en fonction du temps.

2. Circuit d'alimentation électrique selon la revendication 1, **caractérisé en ce que** le dipôle présente une résistance équivalente croissante avec le temps après connexion du circuit d'alimentation électrique au réseau électrique et en l'absence de commande de l'unité de commande.

3. Circuit d'alimentation électrique selon l'une des revendications précédentes, **caractérisé en ce qu'**il comprend des moyens de commande de l'alimentation de l'unité de commande par le convertisseur lors de chaque raccordement de la charge au réseau électrique.

4. Circuit d'alimentation électrique selon l'une des revendications précédentes, **caractérisé en ce qu'**il est apte à fonctionner avec un réseau électrique alternatif et apte à ce que, pendant une alternance positive ou négative de la tension du réseau électrique alternatif, la tension de sortie (US) aux bornes du convertisseur atteigne une valeur suffisante pendant une durée suffisante pour que l'unité de commande ait le temps de commander la connexion du convertisseur au réseau électrique par application d'un signal sur une borne de commande (VC) du dipôle.

5. Circuit d'alimentation électrique selon l'une des revendications précédentes, **caractérisé en ce que** les moyens de connexion et de déconnexion comprennent un condensateur (22a) en parallèle avec un interrupteur commandé (22b) entre un premier pôle (VA) et un deuxième pôle (VB) du dipôle.

6. Circuit d'alimentation électrique selon l'une des revendications 1 à 4, **caractérisé en ce que** les moyens de connexion et de déconnexion comprennent un transistor (22c, 22i) dont les électrodes de puissance sont raccordées à un premier pôle (VA) et à un deuxième pôle (VB) du dipôle tandis qu'un circuit raccordé à l'électrode de commande comprend au moins un condensateur (C4, C5) dont un état complètement chargé entraîne un état bloqué du transistor.

7. Circuit d'alimentation électrique selon l'une des revendications précédentes, **caractérisé en ce que** le dipôle est raccordé en série avec le convertisseur selon l'une des trois configurations suivantes :
- configuration aval, un courant unidirectionnel (IAB) de sens imposé par un redresseur (21 a) traversant le convertisseur avant de traverser le dipôle variable ;
- configuration amont, un courant unidirectionnel (IAB) de sens imposé par un redresseur (21 a) traversant le dipôle variable avant de traverser le convertisseur ;
- configuration mixte, un courant unidirectionnel (IAB) de sens imposé par un redresseur (21 a) traversant une première partie du convertisseur, le dipôle variable, puis une deuxième partie du convertisseur.

8. Circuit d'alimentation électrique selon l'une des revendications précédentes, **caractérisé en ce qu'**il comprend un générateur d'impulsions ou circuit auxiliaire (28) alimenté par au moins une tension du convertisseur et apte à se substituer à l'unité de commande pour commander la connexion du convertisseur au réseau électrique par application d'un signal sur une borne de commande (VC) du dipôle.

9. Dispositif de commande (100 ; 100' ; 100" ; 100"') comprenant une unité de commande (10) comprenant un circuit d'alimentation électrique selon l'une des revendications précédentes.

10. Dispositif de commande selon la revendication 9, **caractérisé en ce que** la première entrée d'alimentation et la deuxième entrée d'alimentation de l'unité de commande sont confondues.

11. Dispositif de commande selon la revendication 9 ou 10, **caractérisé en ce que** le convertisseur alimente l'élément rechargeable.

12. Récepteur d'ordres (5) ou émetteur d'ordres (2), comprenant un dispositif de commande selon l'une des revendications 9 à 11.

13. Installation (1) comprenant un récepteur d'ordres (5) ou un émetteur d'ordres (2) selon la revendication 12.

14. Procédé de fonctionnement d'une unité de commande alimentée par un premier moyen (C1) et par un circuit d'alimentation électrique selon l'une des revendications 1 à 8, **caractérisé en ce que** l'unité de commande commande son alimentation par le circuit d'alimentation électrique jusqu'à ce que la tension aux bornes du premier moyen franchisse à la hausse un premier seuil (VTH1) et dès que la tension aux bornes du premier moyen franchit à la baisse un deuxième seuil (VTH2), le deuxième seuil étant inférieur au premier seuil.

15. Procédé de fonctionnement selon la revendication 14, **caractérisé en ce que** l'unité de commande commande son alimentation par le circuit d'alimentation électrique lors de l'activation de l'unité de commande ou lors de la réception d'ordres particuliers.

## Patentansprüche

1. Stromversorgungskreis (20; 20'; 20*"*) einer Steuereinheit (10) einer Anlage, wobei die Steuereinheit die Stromversorgung einer Last (7) der Anlage durch ein Stromnetz (9) steuert, das Leiter (9a, 9b) umfasst, wobei die Steuereinheit auf einem ersten Versorgungseingang (VCC) von einem aufladbaren Element (6) versorgt wird, **dadurch gekennzeichnet, dass** der Stromversorgungskreis einen Wandler (21) umfasst, dessen Ausgang die Steuereinheit auf einem zweiten Versorgungseingang (VDD) versorgt, wobei der Wandler in Serie mit einem Dipol (22) zwischen den Leitern geschaltet ist, wobei das Dipol Mittel (22a; 22b; 22c; 22i) zum automatischen Anschließen des Wandlers an das Stromnetz derart umfasst, dass die Steuereinheit bei einem Anschließen des Stromversorgungskreises an das Netz automatisch versorgt wird, und zum automatischen Trennen des Wandlers von dem Stromnetz nach einer Versorgungsphase der Steuereinheit durch den Wandler, wobei die Mittel zum automatischen Anschließen auch auf Befehl der Steuereinheit aktivierbar sind, und die Mittel zum automatischen Trennen derart sind, dass das automatische Trennen und mindestens das Aufrechterhalten dieses Trennens keinen Strom auf dem aufladbaren Element entnimmt, wobei sich das Dipol gegenüber dem Strom, der es durchquert, wie ein resistives Element, dessen Widerstand in Abhängigkeit von der Zeit variabel ist, verhält.

2. Stromversorgungskreis nach Anspruch 1, **dadurch gekennzeichnet, dass** das Dipol einen äquivalenten Widerstand aufweist, der mit der Zeit nach dem Anschließen des Stromversorgungskreises an das Stromnetz und bei Fehlen von Steuerung der Steuereinheit zunimmt.

3. Stromversorgungskreis nach einem der vorhergehenden Ansprüche, **dadurch gekennzeichnet, dass** er Steuermittel der Versorgung der Steuereinheit durch den Wandler bei jedem Anschließen der Last an das Stromnetz umfasst.

4. Stromversorgungskreis nach einem der vorhergehenden Ansprüche, **dadurch gekennzeichnet, dass** er geeignet ist, mit einem Wechselstromnetz zu funktionieren und dazu geeignet ist, dass während eines positiven oder negativen Wechsels der Spannung des Wechselstromnetzes die Ausgangsspannung (US) an den Klemmen des Wandlers einen Wert erreicht, der während einer ausreichenden Dauer ausreicht, damit die Steuereinheit die Zeit hat, das Anschließen des Wandlers an das Stromnetz durch Anlegen eines Signals auf einer Steuerklemme (VC) des Dipols zu befehlen.

5. Stromversorgungskreis nach einem der vorhergehenden Ansprüche, **dadurch gekennzeichnet, dass** die Anschluss- und Trennmittel einen Kondensator (22a) mit einem gesteuerten Ein-/Aus Schalter (22b) parallel geschaltet zwischen einem ersten Pol (VA) und einem zweiten Pol (VB) des Dipols umfassen.

6. Stromversorgungskreis nach einem der Ansprüche 1 bis 4, **dadurch gekennzeichnet, dass** die Anschlussmittel und Trennmittel einen Transistor (22c, 22i) umfassen, dessen Leistungselektroden an einen ersten Pol (VA) und an einen zweiten Pol (VB) des Dipols angeschlossen sind, während ein Schaltkreis, der an die Steuerelektrode angeschlossen ist, mindestens einen Kondensator (C4, C5) umfasst, dessen vollständig aufgeladener Zustand einen blockierten Zustand des Transistors nach sich zieht.

7. Stromversorgungskreis nach einem der vorhergehenden Ansprüche, **dadurch gekennzeichnet, dass** das Dipol mit dem Wandler gemäß einer der drei folgenden Konfigurationen in Serie geschaltet ist:
- stromabwärtige Konfiguration, wobei ein Einrichtungsstrom (IAB) mit von einem Gleichrichter (21a) auferlegter Richtung den Wandler durchquert, bevor er das variable Dipol durchquert,
- stromaufwärtige Konfiguration, wobei ein Einrichtungsstrom (IAB) mit von einem Gleichrichter (21a) auferlegter Richtung das variable Dipol durchquert, bevor er den Wandler durchquert,
- gemischte Konfiguration, wobei ein Einrichtungsstrom (IAB) mit von einem Gleichrichter (21a) auferlegter Richtung einen ersten Teil des Wandlers, das variable Dipol und dann einen zweiten Teil des Wandlers durchquert.

8. Stromversorgungskreis nach einem der vorhergehenden Ansprüche, **dadurch gekennzeichnet, dass** er einen Impulsgenerator oder eine Hilfsschaltung (28) umfasst, der/die durch mindestens eine Spannung des Wandlers versorgt wird und geeignet ist, die Steuereinheit zu ersetzen, um den Anschluss des Wandlers an das Stromnetz durch Anlegen eines Signals auf einer Steuerklemme (VC) des Dipols zu befehlen.

9. Steuervorrichtung (100; 100'; 100"; 100'"), die eine Steuereinheit (10) umfasst, die einen Stromversorgungskreis nach einem der vorhergehenden Ansprüche umfasst.

10. Steuervorrichtung nach Anspruch 9, **dadurch gekennzeichnet, dass** der erste Versorgungseingang und der zweite Versorgungseingang der Steuereinheit zusammenfallen.

11. Steuervorrichtung nach Anspruch 9 oder 10, **dadurch gekennzeichnet, dass** der Wandler das aufladbare Element versorgt.

12. Befehlsempfänger (5) oder Befehlssender (2), der eine Steuervorrichtung nach einem der Ansprüche 9 bis 11 umfasst.

13. Anlage (1), die einen Befehlsempfänger (5) oder einen Befehlssender (2) nach Anspruch 12 umfasst.

14. Betriebsverfahren einer Steuereinheit, die von einem ersten Mittel (C1) und von einem Stromversorgungskreis nach einem der Ansprüche 1 bis 8 versorgt ist, **dadurch gekennzeichnet, dass** die Steuereinheit ihre Versorgung durch den Stromversorgungskreis befiehlt, bis die Spannung an den Klemmen des ersten Mittels aufsteigend einen ersten Schwellenwert (VTH1) überschreitet, und, sobald die Spannung an den Klemmen des ersten Mittels einen zweiten Schwellenwert (VTH2) sinkend überschreitet, der zweite Schwellenwert kleiner ist als der erste Schwellenwert.

15. Betriebsverfahren nach Anspruch 14, **dadurch gekennzeichnet, dass** die Steuereinheit ihre Versorgung durch den Stromversorgungskreis bei dem Aktivieren der Steuereinheit oder beim Empfang besonderer Befehle befiehlt.

## Claims

1. Electric supply circuit (20; 20'; 20") of a control unit (10) of an installation, the control unit controlling the electric supply of a load (7) of the installation via an electric network (9) including conductors (9a, 9b), the control unit being supplied on a first supply input (VCC) by a rechargeable element (6), **characterized in that** the electric supply circuit includes a converter (21) of which the output supplies the control unit on a second supply input (VDD), the converter being connected in series with a dipole (22) between the conductors, the dipole including means (22a; 22b; 22c; 22i) for automatic connection of the converter to the electric network in such a way as to supply the control unit automatically when the supply circuit is connected to the network, and for automatic disconnection of the converter from the electric network following a phase of supply of the control unit by the converter, the automatic connection means also being activatable under the control of the control unit and the automatic disconnection means being such that the automatic disconnection and at least the maintenance of this disconnection draw no electric power from the rechargeable element, the dipole behaving in relation to the current flowing through the latter as a resistive element of which the resistance is variable as a function of time.

2. Electric supply circuit according to Claim 1, **characterized in that** the dipole has an equivalent resistance increasing with time following the connection of the electric supply circuit to the electric network and in the absence of control of the control unit.

3. Electric supply circuit according to one of the preceding claims, **characterized in that** it includes means for controlling the supply of the control unit by the converter during each connection of the load to the electric network.

4. Electric supply circuit according to one of the preceding claims, **characterized in that** it is capable of operating with an alternating electric network and is capable in such a way that, during a positive or negative alternation of the voltage of the alternating electric network, the output voltage (US) on the terminals of the converter reaches a sufficient value for a sufficient duration so that the control unit has time to control the connection of the converter to the electric network through the application of a signal to a control terminal (VC) of the dipole.

5. Electric supply circuit according to one of the preceding claims, **characterized in that** the connection and disconnection means include a capacitor (22a) in parallel with a controlled switch (22b) between a first pole (VA) and a second pole (VB) of the dipole.

6. Electric supply circuit according to one of Claims 1 to 4, **characterized in that** the connection and disconnection means include a transistor (22c, 22i) of which the power electrodes are connected to a first pole (VA) and to a second pole (VB) of the dipole while a circuit connected to the control electrode includes at least one capacitor (C4, C5) of which a completely charged state results in a blocked state of the transistor.

7. Electric supply circuit according to one of the preceding claims, **characterized in that** the dipole is connected in series with the converter according to one of the following three configurations:
- downstream configuration, a one-way current (IAB) having a direction imposed by a rectifier (21a) passing through the converter before passing through the variable dipole;
- upstream configuration, a one-way current (IAB) having a direction imposed by a rectifier (21a) passing through the variable dipole before passing through the converter;
- mixed configuration, a one-way current (IAB) having a direction imposed by a rectifier (21a) passing through a first part of the converter, the variable dipole, then a second part of the converter.

8. Electric supply circuit according to one of the preceding claims, **characterized in that** it includes a pulse generator or auxiliary circuit (28) supplied by the at least one voltage of the converter and suitable for replacing the control unit to control the connection of the converter to the electric network through the application of a signal to a control terminal (VC) of the dipole.

9. Control device (100; 100'; 100"; 100''') including a control unit (10) including an electric supply circuit according to one of the preceding claims.

10. Control device according to Claim 9, **characterized in that** the first supply input and the second supply input of the control unit are combined.

11. Control device according to Claim 9 or 10, **characterized in that** the converter supplies the rechargeable element.

12. Command receiver (5) or command transmitter (2), including a control device according to one of Claims 9 to 11.

13. Installation (1) including a command receiver (5) or a command transmitter (2) according to Claim 12.

14. Operating method of a control unit supplied by a first means (C1) and by an electric supply circuit according to one of Claims 1 to 8, **characterized in that** the control unit controls its supply by the electric supply circuit until the voltage on the terminals of the first means exceeds a first threshold (VTH1) and as soon as the voltage on the terminals of the first means falls below a second threshold and (VTH2), the second threshold being lower than the first threshold.

15. Operating method according to Claim 14, **characterized in that** the control unit controls its supply by the electric supply circuit when the control unit is activated or when particular commands are received.
